(19) Europäisches Patentamt / European Patent Office / Office européen des brevets

(11) **EP 3 236 472 B1**

(12) **EUROPEAN PATENT SPECIFICATION**

(45) Date of publication and mention
of the grant of the patent:
**07.08.2019 Bulletin 2019/32**

(51) Int Cl.:
**G21C 9/016** *(2006.01)*     **G21C 13/10** *(2006.01)*
**G21C 15/18** *(2006.01)*

(21) Application number: **15870434.6**

(22) Date of filing: **16.11.2015**

(86) International application number:
**PCT/RU2015/000781**

(87) International publication number:
**WO 2016/099326 (23.06.2016 Gazette 2016/25)**

(54) **SYSTEM FOR CONFINING AND COOLING MELT FROM THE CORE OF A WATER COOLED AND MODERATED REACTOR**

SYSTEM ZUR EINDÄMMUNG UND KÜHLUNG EINER SCHMELZE AUS DEM KERN EINES WASSERGEKÜHLTEN UND WASSERMODERIERTEN REAKTORS

SYSTEME DE CONFINEMENT ET DE REFROIDISSEMENT DE MASSE DE FUSION D'UN COEUR D'UN REACTEUR NUCLEAIRE REFROIDI ET MODERE A EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2014 RU 2014150938**

(43) Date of publication of application:
**25.10.2017 Bulletin 2017/43**

(73) Proprietor: **Joint Stock Company "Atomenergoproekt"**
**Moscow 105005 (RU)**

(72) Inventors:
• **NEDOREZOV, Andrey Borisovich**
**Podolsk**
**Moskovskaya obl. 142114 (RU)**
• **SIDOROV, Aleksandr Stalevich**
**Moscow 115612 (RU)**

(74) Representative: **Friese Goeden Patentanwälte PartGmbB**
**Widenmayerstraße 49**
**80538 München (DE)**

(56) References cited:
CN-A- 1 585 034     GB-A- 2 236 210
RU-C1- 2 063 071     RU-C2- 2 165 108
US-A- 4 280 872      US-A- 5 307 390

• 'Na stroitelstve Baltiiskoi AES.' NOVOSTI KONTSERNA ''ROSENERGOATOM''. XP009503907 Retrieved from the Internet: <URL:http://www.promved.ru/article.phtml?id=2497&nomer=83>

## Description

The invention relates to nuclear power industry, namely to systems providing safety of nuclear power plants (NPP), and can be used during severe accidents leading to reactor vessel and its containment failure.

Core meltdown accidents occurring at multiple failures of core cooling systems constitute the highest radiation hazard.

During such accidents, core melt, corium, melts reactor internals and its vessel and flows out of the reactor vessel and, due to its residual heat, can affect the integrity of the NPP containment, the last barrier on the way of radioactive product release to the environment.

To prevent this, the released corium shall be confined and cooled continuously till its complete crystallization. A reactor core melt (corium) cooling and confinement system performs this function, preventing damage to the NPP containment and thus protecting the population and environment from radiation exposure in case of severe accidents in nuclear reactors.

A system for localization and cooling of a corium of an emergency water-cooled nuclear reactor was disclosed in RU 2253914 C2 and CN 1585034. The system contains a catcher located in the sub-reactor space of a concrete shaft, which cooled shell is made in the form of a vessel, which bottom is recessed towards the center, a steel basket with sacrificial diluents materials for uranium-containing and steel components of the corium installed in the catcher, wherein the diluent materials in the basket are installed in the form of a cellular structure, characterized in that the thickness of the bottom of the shell is not less than 30% greater than shell sidewall thickness, a shell bottom slope towards the center selected in the range 10-20°, diluents materials are formed as pellets enclosed in the steel shell.

A protection system of the containment shell of a water-cooled reactor system was disclosed in RU 21665108 C2. The system contains a pressure zone, a reactor, a concrete shaft with a sub-reactor room, a device for supplying coolant to a concrete shaft consisting of channels; a device for withdrawing coolant from a concrete shaft, consisting of channels; refractory elements with voids in the form of through vertical holes and horizontal grooves, where the refractory elements in the form of T-shaped, rectangular, U-shaped or shaped bricks are installed in layers to form in the aggregate channels in the horizontal and vertical directions; safety body characterized in that the safety body is made with stiffening ribs and is installed under layers of refractory elements on the floor of the concrete shaft.

An emergency cooling system of the core of a nuclear reactor when it is destroyed is disclosed in RU 2063071 C1. The system includes a concrete shaft filled with water during an accident with a manhole, cylindrical thermal insulation, reactor vessel, annular gap between the reactor vessel and cylindrical insulation, thermal insulation of the bottom of the case with a central supply channel in it, cooling channels between the bottom of the case and the thermal insulation of the bottom of the case, lifting channels, side supply channels, collecting the container under the thermal insulation of the bottom of the case, including outside a neck wall consisting of a side part and a bottom, heat insulation closed by a casing, an intermediate precast thermal collector consisting of temperature-resistant material granules, a side high-temperature wall consisting of a heat-conducting wall and a wall of refractory metal, bottom bed consisting of a distribution layer, capillary layer consisting of uranium dioxide or thorium dioxide and a temperature resistant insulating layer, heat pipes, the evaporators of which are located in the intermediate precast thermal collector, and the condenser behind the outer wall, characterized in that the outer wall is connected to the reactor vessel, the collecting container is closed by a partition, which together with the collecting container forms a "dry catcher", the bottom and side walls of which are covered with a thermal damper made of a fusible material covered by the casing, the intermediate collector thermal collector is filled with low-melting material; at the entrances to the side supply channels, locking valves are installed with latches of plugs and anti-shock channels are connected, the middle part of the partition is made of a low-melting material, the bottom of the outer wall is installed with a gap in the concrete shaft, the heat pipe capacitors are enclosed with a partition forming, together with the side of the outer wall, a lifting section to which the lifting tubes are connected, which together with the manhole loop cooling the "dry catcher".

According to the background of the invention, there is a nuclear reactor corium confinement and cooling device located in a concrete cavity under the reactor and containing a water-cooled vessel, pellets with a uranium-bearing oxide corium diluent that are bound by cement mortar and placed in horizontal layers of steel blocks, the bottom of the lower block is identical in shape to the vessel bottom, the blocks above have a center hole, and the assemblies attaching the blocks to each other and to the vessel are located in vertical cut slots of the blocks (see Russian Patent No. 2514419 dated 4/27/2014).

The said analog has several disadvantages:

- the bottom of the lower block identical in shape to the vessel bottom has no central hole while blocks above have it, this results in "jamming" of pellets with diluent in the lower block when the first portion of corium containing mostly melted steel and zirconium enters. Considering that the bottom slope angle is between 10 and 20 degrees, the weight of the "jammed" pellets with diluent constitutes 25 to 35% of the total weight of the pellets in the vessel. Next portions of corium containing mostly uranium and zirconium oxides comes after one to three hours after the first portion and cannot provide conditions for thermal chemical reaction with the pellets in the lower block, as the steel delivered earlier will either solidify in the lower block (thus preventing interaction of the pellets with uranium and zirconium oxides) or destroy the steel structure and fasteners of the lower block (then all pellets located inside will float up and form a slag cap above the corium),

- a formula to determine the weight of uranium-bearing oxide corium diluent does not determine the minimum limit of the required weight of diluent correctly due to the incorrect consideration of correlation between the thickness of layers of oxides and metals from the nuclear reactor. The lower limit under this formula shall be increased by 35% in case pellets are jammed in the lower block, and by 15% more in case pellets are blocked by melted steel in the upper blocks before inversion of the oxide and metal layers starts. Thus, the lower limit for calculation of the diluent weight shall be multiplied by a coefficient of 1.5.

- the maximum weight of the residual water in weight percentage in the cement binder for diluent pellets does not exceed 8%, which does not seem correct. According to the results of experiments (see "Investigation of conditions to provide bonding of sacrificial SFAO ceramic with colored mixture brick mortar". Technical information. Ministry of Science and Education of the Russian Federation, State Educational Institution of Higher Professional Training, St. Petersburg State Technological Institute (technical university), 2013, [1]), effective bonding of the pellets providing the design operability requires that weight fraction of chemically bound water shall be 10%, otherwise integrity of pellet setting and their operability will be compromised. A thesis on decrease of water content in the cement binder in order to decrease hydrogen release is incorrect due to the incorrect consideration of steam interaction with porous structure of the pellets setting.

According to the background of the invention, there is a heat exchanger vessel wall structure designed for corium confinement and cooling devices comprising internal and external walls with granulated ceramic filler material that is chemically similar to the sacrificial material, at least 100 mm thick in between (see Russian Utility Model Patent No. 100326, 12/10/2010).

This vessel structure has the following disadvantages:

- granulated ceramic material does not provide effective protection of the heat exchanger vessel external wall from thermal impact induced by high-temperature melt, as this material is an effective heat insulator with thermal conductivity less than 0.5 W/(m K) on average and practically does not transfer heat to the vessel external wall until the end of the melting process, which increases the risk of heat exchanger destruction during convection washing of granulated material by the core melt,

- granulated ceramic material does not provide reliable chemical protection of the heat exchanger vessel external wall, as in case the heat exchanger internal wall is destroyed, this material can pour out from vertical inter-wall space at discharge rate determined by the destruction area, such process will empty the inter-wall space and leave the external wall without the required chemical and thermal protection, thus increasing the risk of heat exchanger destruction,

- large (at least 100 m) width of the gap between the external and internal walls of the heat exchanger during melting of the granulated ceramic material (containing iron and aluminum oxides) results in significant redistribution of heat flows, the main heat flow passes not through the external wall of the heat exchanger vessel, but through the unprotected free surface of the melt mirror increasing average corium temperature in the heat exchanger, thus causing the following processes: increased aerosol generation, high release of non-condensing gases, increased thermal emission, additional heating and destruction of the equipment located above, and, as a result, corium flowing out of the cooled area leading to destruction of the heat exchanger.

That is why application of granulated ceramic backfills without a strong heat conducting connection with the heat exchanger external wall is ineffective.

The purpose of this invention is to eliminate the deficiencies of similar inventions.

The technical result of the invention involves increased efficiency of heat removal from melt and improved structural reliability.

The said technical result is achieved owing to the fact that the water-cooled water-moderated nuclear reactor core melt cooling and confinement system contains a cone-shaped guide plate installed under the reactor vessel bottom, a cantilever girder installed under the guide plate and supporting the same, a core catcher installed under the cantilever girder and equipped with a cooled cladding in the form of a multi-layer vessel for protection of the external heat-exchange wall from dynamic, thermal and chemical impacts, and filler material for melt dilution inside the multi-layer vessel, wherein the vessel contains external and internal metal layers with intermediate layer in the form of a non-metal filler located in between, and bearing ribs are installed between the internal and external layers at an azimuth pitch ($s_{pitch}$), i.e. circular pitch in the centreplane of the multi-layer vessel, that meets the following criterion:

$d_{ext}/15 < s_{pitch} < d_{ext}/5$, where $d_{ext}/15$ is external diameter of the vessel.

The above technical result is achieved in specific options of the invention owing to the fact that:

- bearing ribs are rigidly secured to the external layer and are not secured to the internal layer,

- bearing ribs are rigidly secured to the external and internal layers,

- bearing ribs are installed with radial and azimuth thermal clearances,
- the bottom part of the vessel that connects the upper cylinder part with the lower cone part contains a toroidal compound three-layer shell that ensures, on the one hand, smooth hydrodynamic transition from the cone to the cylinder part of the vessel, and, on the other hand, ensures thermal expansion of the internal layer regardless of that of the external layer,
- the vessel contains an additional 0.1-0.5 mm thick corrosion-resistant layer applied on the external layer,
- the vessel contains additional 0.5-5 mm thick layer that increases convection heat transfer to water applied on the external layer.

Compared to the analogs, the system under consideration includes a core catcher with a three-layer cladding with external (outer) and internal metal walls and a filler, and with bearing ribs installed between the external and internal walls at an azimuth pitch ($S_{pitch}$), that is circular pitch in the centreplane of the multi-layer vessel, that meets the following criterion: $d_{ext}/15 < s_{pitch} < d_{ext}/5$, where $d_{ext}$ is external diameter of the vessel (m).

The specified parameter correlation provides adequate pitch of bearing ribs installation subject to the external diameter of the vessel that can vary from 3 to 12 m, with the smaller value of the quotient selected for larger diameters and the larger one selected for smaller diameters. In other words, if the external diameter of the vessel is 12 m, quotient from the division by 15 is selected, and if it is 3 m, quotient from the division by 5 is selected, in this case arrangement pitch of the ribs in the azimuth plane (centreplane) will be approximately from 0.4 to 0.8 m.

The invention is illustrated with drawings, where:

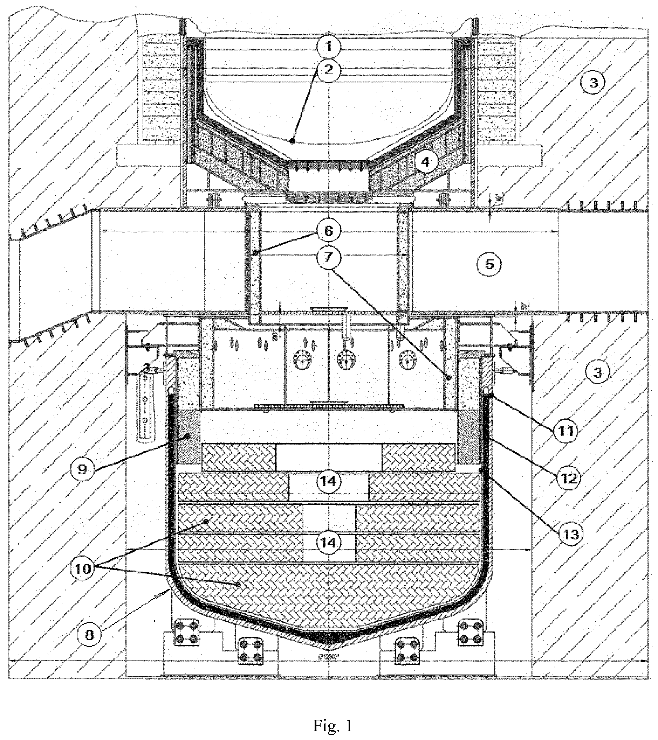

Figure 1 shows the schematic design of the corium confinement and cooling system, and
Figure 2 shows the design of corium catcher multi-layer vessel.

Designation of structural elements in the drawings:

1 - reactor vessel,

2 - reactor vessel bottom,

3 - concrete vault (reactor cavity),

4 - guide plate,

5 - cantilever girder,

6 - cantilever girder thermal protection,

7 - operating floor,

8 - core catcher,

9 - thermal protection of multi-layer vessel flange,

10 - filler,

11 - multi-layer vessel outer layer,

12 - multi-layer vessel filler,

13 - multi-layer vessel inner layer,

14 - graded tapered or cylindrical sump for corium,

15 - bearing rib,

16 - cylinder part of the vessel,

17 - cone part of the vessel,

18 - three-layer toroidal shell.

According to the claimed invention, a cone-shaped guide plate (4) supported by a cantilever girder (5) with thermal protection (6) is installed under the bottom (2) of the reactor vessel (1) located in a concrete vault (3).

Under the cantilever girder (5), there is a core catcher (8) with a cooled cladding (vessel) in the form of a multi-layer vessel containing an external (11) and an internal (13) metal layers (walls) with a non-metal filler (12) in between. Inside the core catcher (8), there is a sacrificial filler (10) applied to dilute corium. In addition, the filler (11) is equipped with a graded, tapered or cylindrical sump (14) for corium accommodation.

Besides, the core catcher vessel (8) is provided with thermal protection (9) of a multi-layer vessel flange.

An operating floor (7) is located in the space between the cantilever girder (5) and the catcher (8).

The guide plate (4) is designed to guide the corium (core melt) after reactor vessel destruction or melt-through into the catcher (8). In addition, the guide plate (4) prevents large fragments of vessel internals, fuel assemblies and reactor vessel bottom from falling into the catcher and protects the cantilever girder (5) and its communication lines in case of corium from the reactor vessel (1) coming into the catcher (8). The guide plate (4) also protects the concrete vault (3) from direct contact with core melt. The guide plate (4) is divided by strength ribs into sections for core melt flowdown. The strength ribs restrain the reactor vessel bottom (2) with the melt preventing the bottom from covering bores of the guide plate (4) sections and blocking the melt flowdown in case of its destruction or severe plastic deformation. Under the surface of the guide plate cone, there are two layers of concrete: a layer of sacrificial concrete (iron and aluminum oxide base) directly under the surface, and a layer of thermostable heat resistant concrete (aluminum oxide base) under the sacrificial concrete. As the sacrificial concrete is being diluted inn the melt, it increases the clear area in the guide plate sections in case of blocking (when the corium is solidified in one or several sectors), which allows to prevent overheating and destruction of strength ribs, i.e. complete blocking of the clear area and, subsequently, the destruction of the guide plate. Thermostable heat resistant concrete provides structure strength when the sacrificial concrete thickness is decreased. This concrete protects the underlaying equipment from the corium impact preventing the latter from melting or destructing the guide plate (4).

The cantilever girder (5) protects not only the catcher (8), but also the internal communication lines of the whole corium confinement and cooling system from destruction by corium and serves as a support for the guide plate (4) that transfers statistical and dynamic impacts to the cantilever girder (5) fastened in the reactor vessel (3). The cantilever girder (5) also ensures operability of the guide plate (4) in case of its sectional destruction when bearing capacity of the ribs is compromised.

The cantilever girder (5) comprises:

- cover pipes connecting instrumentation and control (I&C) sensors,
- corium spray lines (a header with distribution pipelines) connecting the cooling water supply from external sources, the cooling water is supplied by the spray lines to be sprayed on the corium from the cantilever girder above,
- steam removal lines removing steam from the concrete vault (3) under the reactor to the pressurized area when the corium is cooled in the core catcher (8), the lines remove saturated steam without exceeding the allowable pressure in the concrete vault (3),
- air supply lines supplying air for guide plate (4) cooling during normal operation.

The catcher (8) confines and cools the core melt under the reactor in the reactor cavity (3) in case of reactor vessel (1) melt-through or destruction by means of an evolved heat-exchange surface and heat transfer to large volumes of boiling water. The catcher (8) is installed in the reactor cavity (3) foundation on embedded parts.

According to the claimed invention, the catcher (8) cladding is a multi-layer vessel that comprises:

- an external metal layer (11): external cladding formed by the wall and the bottom,
- non-metal filler (12) layer,
- an internal metal layer (13): internal cladding formed by the wall and the bottom.

The external layer (11) can be made of steel, such as grade 22K, 20K, with wall thickness 10 to 70 mm and bottom thickness 70 to 120 mm.

The internal layer (13) can be made of steel, such as grade 22K, 20K 09G2S, with wall thickness 15 to 40 mm and bottom thickness 20 to 40 mm.

The filler (12) layer may be made of highly or poorly heat-conductive material.

Material with fusion temperature from 300 to 800 °C may be used as a highly heat-conductive filler material, preferably of low-melt concrete with maximum fusion temperature and thickness not exceeding 600 °C and 70-150 mm accordingly.

Material with fusion temperature over 800°C may be used as a poorly heat-conductive filler material, particularly concrete or ceramic backfill.

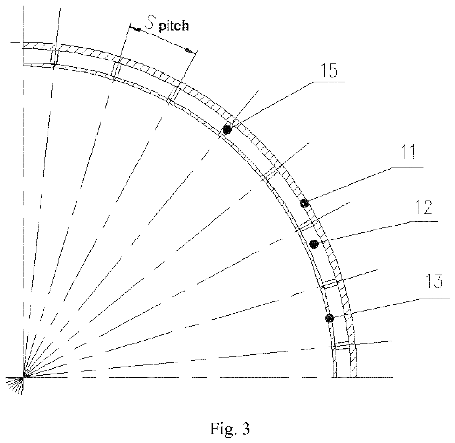

Bearing ribs (15) are installed between the internal (13) and external (11) layers (see Fig. 3) at an azimuth pitch ($S_{pitch}$) that meets the following criterion:

$$d_{ext}/15 < s_{pitch} < d_{ext}/5,$$

where $d_{ext}$ is external diameter of the vessel.

Azimuth pitch ($S_{pitch}$) is a pitch around the external diameter of the circumference in the centreplane of the multi-layer vessel (in cross section), i.e. distance between intersections of the bearing ribs with the external wall (external layer) of the vessel (see Fig. 3).

Indicated bearing ribs (15) are rigidly secured to the external layer (11) and may be secured to the internal layer (12).

In particular, bearing ribs may be made of 22K steel and have 10-60 mm thickness and 200-800 mm azimuth arrangement pitch.

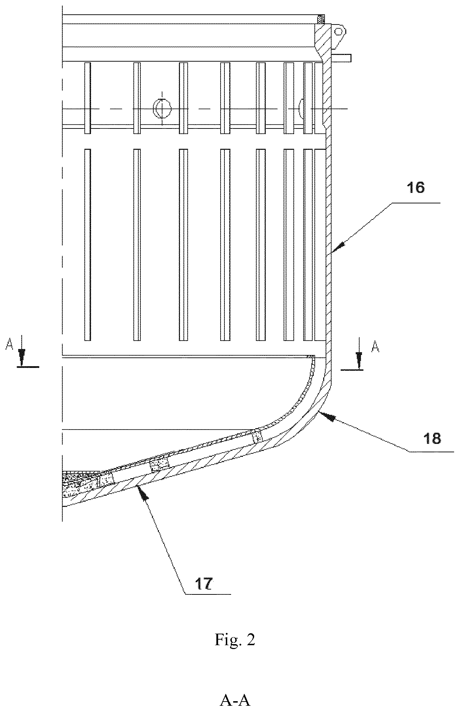

The bottom part of the vessel (Fig. 2) that connects the upper cylinder part (16) with the lower cone part (17) contains an additional toroidal compound three-layer shell (18) that ensures, on the one hand, smooth hydrodynamic transition from the cone to the cylinder part of the vessel, and, on the other hand, ensures thermal expansion of the internal layer regardless of that of the external layer,

The multi-layer vessel of the catcher (8) may contain an additional 0.1-0.5 mm thick corrosion-resistant layer applied on the external layer,

In addition, the vessel may contain an additional 0.5-5 mm thick layer that increases convection heat transfer to water applied on the external surface of the external layer.

The upper part of the catcher (8) multi-layer vessel is equipped with a flange, its inner and outer diameters correspond to those of the vessel internal and external walls accordingly.

The filler (10) provides volumetric distribution of corium within the core catcher (8). Is designed for corium oxidization and dissolution to reduce the volumetric energy release and increase the heat-exchange surface between the energy-emitting corium and the multi-layer vessel external layer (11), as well contributing to creation of conditions for fuel-containing corium fractions to float above the steel layer. The filler (10) can be made of steel and oxide components containing iron, aluminum and zirconium oxides, with channels for corium distribution not only in the cylinder part, but in bottom cone cavity as well.

The operating floor (7) provides heat protection of the catcher (8) top part allowing to perform visual inspection of the reactor vessel (1) during scheduled preventive maintenance by providing access to:

- the filler (10) for revision and water removal in case of leakage accidents,
- the pressurized assemblies protecting the filler (10) from leakage accidents,
- the I&C sensor cover pipe end fittings for repairs or sensor replacement.

The claimed system operates as follows:
At the time of vessel (1) destruction, the core melt impacted by hydrostatic and excessive pressures starts to move to the guide plate (4) surface supported by the cantilever girder (5).

As the core flows down through the guide plate (4) sections, it goes inside the multi-layer vessel of the catcher (8) and contacts with the filler (10).

In case of sectional asymmetric corium flowdown, thermal protections (6) of the cantilever girder (5) and operating floor (7) are starting to melt. Being destroyed, the thermal protections decrease heat impact of the corium on the protected equipment while decreasing temperature and chemical reactivity of the corium itself.

First, the corium fills the sump (14), then, as the other steel structure components of the filler (10) are melted, it fills the voids between the non-metal components of the filler (10). The nonmetallic components of the filler (10) are interconnected with special cement that provides baking of these nonmetallic components together into a structure preventing the filler (10) components from floating up in the heavier core melt. As the nonmetallic components are baked together, the setting has a sufficient strength when the steel fasteners of the filler (10) lose their strength. Thus, decrease of the steel component strength of the filler (10) during temperature increase is compensated by increase of the setting nonmetallic component strength of the filler (10) during baking. After the steel components of the filler (10) are melted and dissolved, surface interaction of the filler (10) nonmetallic components with core melt components is started. The filler design, physical and chemical properties are selected to provide maximum efficiency of filler dissolution in the core melt, prevent corium temperature increase, decrease aerosol generation and radiative heat transfer from the melt mirror, decrease generation of hydrogen and other non-condensing gases. One of the filler components is ferric oxide with various oxidation degrees which oxidates zirconium, fully oxidates uranium and plutonium dioxides in the course of its interaction with core melt, thus preventing their metal phase, and ensures full oxidation of other corium components, which allows to prevent water steam radiolysis and to block oxygen sorption from the atmosphere over the melt mirror surface. This further leads to a significant reduction of hydrogen emission. Ferric oxide releases oxygen during this process and can deoxidize up to metallic iron inclusive.

The core melt is discharged into the filler (10) in two stages: at the first stage, mainly melted steel and zirconium with a mixture of oxides from the reactor vessel (1) are flowing to the filler (10), at the second stage, the main components of the core melt flowing to the filler are liquid hard-melting oxides with a mixture of metals. Considering this, there are two different types of interaction between the core melt and the filer (10): 1) metal components of the core melt interact with the filler components and melt them, as fluid metal zirconium from the core melt is oxidized in the course of boundary interaction with the nonmetallic filler components that float up after melting and form a layer of light iron and zirconium oxides above the layer of molten metals, 2) oxide components of the core melt interact both with metal structures and nonmetallic filler components, melt and dissolve them, while zirconium, chrome and some other molten metals included in the oxide fraction of the core melt are oxidized during interaction with the nonmetallic filler components. Such complicated multistage interaction results in further oxidization of the melt oxide fraction and oxidation of the most active components of the melt metal fraction, generation of corium with preset properties that allow to confine it in a restricted volume and perform its safe and efficient long-term cooling.

Interaction of corium with the filler (10) results in decrease of the generated corium temperature approximately 1.5 to 2 times, which allows to lower the radiative heat flow from the melt mirror to the cantilever girder, guide plate and reactor vessel bottom above the latter significantly. In order to decrease radiative heat flows from the melt mirror and aerosol generation more effectively, both natural and artificial slag caps are used that are formed both during melting of special-purpose concretes under heat emission from the melt mirror and during fluid corium melt interaction with the filler. The thickness and life time of the slag cap are selected to minimize the melt mirror impact on the above located equipment in the worst case initial period of corium confinement: during its entry into the filler (10) and accumulation in core catcher (8). The time of core melt entry into the catcher can reach up to several hours, while the oxide phase entry is significantly uneven and can be followed by a considerable change or temporary termination of the flow.

Chemical reactions of the filler (10) and the core melt gradually change corium composition and structure. At the initial stage, the core melt can change from homogeneous into double-layer structure: generally mixture of molten steel and zirconium on the top with melt of high-melting oxides mixed with metals in the bottom, high-melting oxide melt density is on average 25% higher than the density of molten metal mixture. Gradually, as the filler is being dissolved in the core melt fluid oxides, the corium composition, particularly its oxide fraction, is changed: the fluid oxide density decrease is more intensive than the change of density of molten metals. This process leads to continuous decrease of density difference between fluid metal and oxide fractions of the corium. The initial weight of nonmetallic sacrificial materials in the filler is selected so as to guarantee dissolution of nonmetallic sacrificial materials in the core fluid high-melting oxides in such amount that the resultant density of the new oxide melt would be less than the density of the corium molten metal fraction. When fluid oxide density becomes less than the molten metal density, inversion occurs in the corium molten pool: fluid oxides float up, and the corium molten metal fraction goes down. The new corium structure allows to perform safe water cooling of the melt mirror. When fluid oxides come to the surface, cooling water does not create risk of steam explosions due to thermal physical properties of fluid oxides, and does not enter into hydrogen-generating chemical reactions, is not subject to thermal decomposition owing to a relatively low melt mirror temperature. Inversion of fluid oxides and metals allows to provide a steadier heat flow through the catcher multi-layer vessel to the ultimate heat sink, water, which is caused by various thermal physical properties of fluid oxides and molten metals.

Heat is transfered from the corium to the catcher (8) in three stages. At the first stage, when mainly molten metals flow into the sump (14) of the filler (10), heat exchange between the catcher (8) multi-layer vessel (11-13) layers and the melt is not particularly intensive: the heat accumulated by the melt is spent primarily on heating and partial melting of filler (10) structural components. The catcher (8) lower part is heated evenly and has no significant features. Considering that the catcher (8) cone bottom is on average 30% thicker than its cylindrical part, and vertical convective heat transfer from top downwards is considerably less effective than radial convective heat transfer or vertical convective heat transfer from bottom upwards, the catcher (8) bottom heating process is significantly slower than the subsequent heating of its cylindrical part.

At the second stage, when fluid high-melting oxides dominate, the corium melt level increases significantly (considering dissolution of filler sacrificial materials). The corium oxide fraction is energy-emitting. Energy emission is distributed between the oxide and metal corium fractions in proportion of approximately 9 to 1, which leads the considerable heat flows from the corium oxide fraction. As the density of the corium oxide fraction at the initial stage of interaction with the filler is significantly higher than the density of molten metal, stratification and redistribution corium components becomes possible:

molten metals on the top and high-melting oxides in the bottom. In this condition, when the catcher (8) bottom is not hearted significantly by high-melting oxides because convective heat transfer is directed from top downwards, and heat conductivity of the oxide crust on the "vessel wall/oxides" boundary is insignificant and, on average, does not exceed 1 W/(m K). The oxide crust consisting of molten high-melting oxides (slag line) is formed as a result of oxide melt cooling on the "oxides/metal" boundary, as the metal has a times higher heat conductivity than the oxides and can provide better heat transfer to the ultimate heat sink, water. This effect is used for reliable corium confinement that allows to prevent chemical interaction of the corium components with the external layer of the water-cooled multi-layer vessel (11) and provide its thermal protection. The molten metals above fluid oxides receive energy generally due to convective heat transfer with fluid oxides, the heat transfer direction is from bottom upwards. This condition can lead to overheating of the corium molten metal fraction and significantly uneven distribution of heat flows through the multi-layer vessel layers (11-13) of the catcher (8) to the ultimate heat sink, while increasing heat flow density by radiation from the melt mirror. In the interaction area of the catcher (8) multi-layer vessel (11-13) layers and liquid metal part of the corium, neither slag layer nor natural barriers caused by multi-layer vessel overheating are formed. The task at hand is solved by design provisions.

At the third stage, the corium interacts with the filler (10) as it comes out on the internal layer of the multi-layer vessel (13). By that time the external layer of the multi-layer vessel (11) on the reactor cavity (3) side is filled with water. The core catcher (8) is installed in the reactor cavity (3) and is connected with the sump collecting reactor plant primary circuit coolant during design and beyond-design basis accidents, and water supplied to the primary circuit from safety systems. To prevent failure of the external layer of the multi-layer vessel (11) transferring heat by high-temperature corium melt, the core catcher (8) is designed as a multi-layer vessel described above. In this case it is possible to distribute thermal and mechanical loads between the layers (11-13) of the multi-layer vessel: the main thermal loads are taken up by the internal layer (13), and the main mechanical loads (impact and pressure) are taken up by the external layer (11). Mechanical loads are transferred from the internal (13) to the external layer (11) by bearing ribs installed on the internal surface of the external layer (11) with the internal layer (13) welded thereto. This design ensures that the internal layer (13) transfers the thermal deformation stress through the ribs to the cooled external layer (11). To minimize thermal stress on the internal layer (13) side the ribs are connected to the external layer (11) with the use of thermal damping.

If the filler (12) made of highly heat-conductive material (low-melting concrete) is used, it ensures heat transfer from the internal layer of the vessel (13) to the external one (11). The internal layer (13) is heated by the corium and the heat is transferred to the filler (12) (low-melting concrete). First, during heat conduction, the filler is heated up to the melting temperature, then, as the melted area width is increasing, convective heat transfer between the internal layer (13) and the not-melted filler (12) is started. This process is continued until the filler (12) is melted completely with heat flow release from the internal layer to the external one. The process of filler (12) melting is rather fast due high heat conductivity of the material, therefore, practically all heat flow from the internal layer of the vessel will be absorbed by the filler material. For this purpose, the filler thickness is selected to meet the following main two criteria: 1) concrete melting time shall be significantly shorter than the time of the vessel internal layer critical heating leading to strength loss, 2) such level of convective heat transfer shall be provided between the internal and external layers that the heat flow density transferred from the internal layer of the vessel to the molten concrete is decreased 1.5 to 2 times during transfer from the molten concrete to the external layer (external wall) due to convective heat-mass transfer in the molten concrete. The first main criterion is met due to structural design: selection of filler (10) macro-porosity to provide moderate heat flow to the vessel internal layer at the initial stage of corium interaction with the filler allowing to melt the concrete without strength loss of the vessel internal layer during its temperature increase. Such macro-porosity allows to exclude impact of the whole corium on the vessel internal layer internal surface by limiting this impact approximately to one tenth of the total energy release from residual energy release and chemical reactions with the filler (10) components in the corium during a restricted time period at the initial stage of interaction. At the final stage of core melt interaction with the filler (10), the vessel internal layer is heated up to the design temperature, and fluid low-melting concrete provides convective heat transfer to the vessel external layer and further to the ultimate heat sink (water) in area of thermal contact of the corium and the vessel internal layer. The second main criterion is met due to the properties of fluid low-melting concrete and parameters of the space between the vessel layers, wherein convective heat-mass transfer guarantees the preset decrease of heat flow density during its transfer from the internal layer to the external one.

If the filler (12) made of poorly heat-conductive material is used, it ensures maintenance of the thermal insulation of the catcher (8) external layer (11) at the initial stage of the core melt ingress. The main purpose of the filler (12) is to protect the external layer (11) of the catcher (8) from thermal impact and to form a slag layer on its internal surface. The corium heats up the internal layer (13) and it melts down, the heat is transferred to the filler (12) which also melts down while being heated up and forms a slag crust on the relatively cold internal surface of the external layer of the multi-layer vessel (11). This process continues until the internal layer (13) and the filler (12) of the multi-layer vessel are fully melted. The filler (12) is rapidly melted and diluted in corium due to low heat conductivity of the filler, hence, heat current from the corium to the internal layer (13) of the multi-layer vessel will be used nearly exclusively to melt the internal layer (13) and the filler (12). The slag layer formed by the filler allows to limit the heat current to the external layer (11) of the multi-layer vessel, redistribute it throughout the height of the external layer (11), and flatten it in relation to local height and azimuth fluctuations.

Density limitation of the heat current passing through the external layer (11) of the multi-layer vessel is required to ensure a stable and acritical heat transfer to the ultimate heat sink, i.e. circumambient water of the core catcher (8). Heat is transferred to water in the "pool boiling" mode, which provides for the possibility of passive heat removal for an unlimited period of time. The function of heat current restriction is fulfilled by two components of the nuclear reactor core melt cooling and confinement system.

The first component is the filler (10), which, on the one hand, provides for dilution and volume increase of heat-producing part of the corium thus allowing to increase the heat exchange area while reducing density of the heat current through the external layer (11) of the core catcher (8), and, on the other hand, provides for inversion of the oxide and metal parts of the corium with the oxide part moving upwards and liquid metal part moving downwards while reducing maximum heat currents to the external layer (11) by redistributing heat currents in the lower part of the core catcher (8). The second component is the filler (12) of the multi-layer vessel, which provides for reduction (flattening) of maximum heat currents at the external layer (11) by forming high-melting slag crust that ensures redistribution of maximum heat currents from the corium by height and azimuth (centreplane) of the external layer (11) of the core catcher (8).

Steam produced on the external layer (11) surface goes up and flows through steam relief channels to the containment where it is then condensed. The condensate flows from the containment to the sump connected by flow passages with the reactor cavity (3) where the core catcher (8) is installed. Therefore, in case of long-term cooling of the core catcher cooling water circulation and constant heat removal from the external layer (11) are ensured. Corium in the catcher (8) gradually cools down as the stored heat and the heat of residual energy emissions decrease. At the initial stage of melt cooling after the interaction with filler (10) is completed, the main heat exchange is carried out through the external layer of the multi-layer vessel (11). After water is supplied to the catcher (8), heat flows are gradually balanced: the heat flow through the external layer (11) becomes equal to the heat flow from the corium surface. At the final stage the corium may be cooled down directly by water supplied into the core catcher (8), which is possible if corium forms a water-permeable structure during its solidification.

Thus, the said catcher (8) of the water-cooled water-moderated nuclear reactor core melt cooling and confinement system, as a whole, allows to increase the efficiency of heat removal from the melt while maintaining the integrity of the external layer of the multi-layer vessel (11).

## Claims

1. Water-cooled water-moderated nuclear reactor core melt cooling and confinement system containing:

   a reactor vessel having a bottom (2),
   a cone-shaped guide plate (4) installed under the reactor vessel bottom (2),
   a cantilever girder (5) installed under the guide plate (4) and supporting the same,
   a core catcher (8) installed under the cantilever girder (5) and equipped with a cooled cladding in form of a multi-layer vessel for protection of the external heat-exchange wall of the core catcher (8) from dynamic, thermal and chemical impacts,
   and filler material (10) for melt dilution inside the multi-layer vessel,
   wherein the multi-layer vessel contains internal (13) and external (11) metal layers with an intermediate layer in the form of a non-metal filler (12) located in between and wherein bearing ribs (15) are installed between the internal (13) and external (11) layers at an azimuth pitch ($S_{pitch}$) that meets the following criterion:

   $$d_{ext} / 15 < S_{pitch} < d_{ext} / 5,$$

   where $d_{ext}$ is external diameter of the multi-layer vessel.

2. The system according to claim 1, wherein the bearing ribs (15) are rigidly secured to the external (11) metal layer and are not secured to the internal (13) metal layer,

3. The system according to claim 1, wherein the bearing ribs (15) are rigidly secured to the external (11) and internal (13) metal layers.

4. The system according to claim 1, wherein the bearing ribs (15) are installed with radial and azimuth thermal clearances.

5. The system according to claim 1, wherein the bottom part of the multi-layer vessel that connects the upper cylinder part (16) of the multi-layer vessel with the lower cone part (17) of the multi-layer vessel contains a toroidal compound three-layer shell (18) that ensures thermal expansion of the internal layer regardless of that of the external layer.

6. The system according to claim 1, wherein the multi-layer vessel contains an additional 0.1-0.5 mm thick corrosion-resistant layer applied on the external (11) metal layer.

7. The system according to claim 1, wherein the multi-layer vessel contains an additional 0.5-5 mm thick layer that increases convection heat transfer to water applied on the external surface of the external (11) metal layer.

## Patentansprüche

1. Wassergekühltes, wassermoderiertes Kernreaktor-Kernschmelzekühl- und -eindämmungssystem, enthaltend:

   einen Reaktorbehälter mit einem Boden (2),
   eine kegelförmige Führungsplatte (4), die unter dem
   Reaktorbehälterboden (2) installiert ist,
   einen Kragträger (5), der unter der Führungsplatte (4) installiert ist und
   diese trägt,
   einen Kernfänger (8), der unter dem Kragträger (5) installiert und mit einer gekühlten Verkleidung in Form eines mehrschichtigen Gefäßes ausgestattet ist, zum Schutz der äußeren Wärmetauscherwand des Kernfängers (8) vor dynamischen, thermischen und chemischen Einflüssen,
   und Füllmaterial (10) zur Schmelzeverdünnung im Inneren des mehrschichtigen Gefäßes,
   wobei das mehrschichtige Gefäß innere (13) und äußere (11) Metallschichten mit einer Zwischenschicht in Form eines nichtmetallischen Füllstoffs (12) dazwischen enthält und wobei zwischen den inneren (13) und äußeren (11) Schichten Auflagerippen (15) mit einer Azimutteilung ($S_{pitch}$) installiert sind, die das folgende Kriterium erfüllt:

   $$d_{ext} / 15 < S_{pitch} < d_{ext} / 5,$$

   worin $d_{ext}$ der Außendurchmesser des mehrschichtigen Gefäßes ist.

2. System nach Anspruch 1, wobei die Auflagerippen (15) starr an der äußeren (11) Metallschicht befestigt sind und nicht an der inneren (13) Metallschicht befestigt sind.

**3.** System nach Anspruch 1, wobei die Auflagerippen (15) starr an der äußeren (11) und inneren (13) Metallschicht befestigt sind.

**4.** System nach Anspruch 1, wobei die Auflagerippen (15) mit radialen und azimutförmigen Wärmedurchgangsspalten installiert sind.

**5.** System nach Anspruch 1, wobei der untere Teil des mehrschichtigen Behälters, der den oberen Zylinderteil (16) des mehrschichtigen Behälters mit dem unteren Konusteil (17) des mehrschichtigen Behälters verbindet, eine dreischichtige Hülle (18) aus einer toroidalen Verbindung enthält, die die thermische Ausdehnung der inneren Schicht unabhängig von der der äußeren Schicht gewährleistet.

**6.** System nach Anspruch 1, wobei das mehrschichtige Gefäß eine zusätzliche 0,1-0,5 mm dicke korrosionsbeständige Schicht enthält, die auf der äußeren (11) Metallschicht aufgebracht ist.

**7.** System nach Anspruch 1, wobei das mehrschichtige Gefäß eine zusätzliche 0,5-5 mm dicke Schicht enthält, die die Konvektionswärmeübertragung auf Wasser erhöht, das auf die äußere Fläche der äußeren (11) Metallschicht aufgebracht ist.

**Revendications**

**1.** Système de refroidissement et de confinement de fusion d'un coeur de réacteur nucléaire refroidi à l'eau et modéré à l'eau, contenant :

une cuve de réacteur comportant un fond (2),
une plaque de guidage conique (4) installée sous le fond (2) de cuve de réacteur,
une poutre en porte-à-faux (5) installée sous la plaque de guidage (4) et supportant celle-ci,
un dispositif de réception de coeur (8) installé sous la poutre en porte-à-faux (5) et équipé d'un revêtement refroidi sous la forme d'une cuve multicouche pour protéger la paroi externe d'échange thermique du dispositif de réception de coeur (8) contre les impacts dynamiques, thermiques et chimiques,
et un matériau de remplissage (10) pour la dilution de la fusion à l'intérieur de la cuve multicouche,
dans lequel la cuve multicouche contient des couches métalliques interne (13) et externe (11) avec une couche intermédiaire sous la forme d'une charge non métallique (12) située entre les deux et dans lequel des nervures de support (15) sont installées entre les couches interne (13) et externe (11) avec un pas azimutal ($S_{pitch}$) qui répond au critère suivant :

$$d_{ext} / 15 < S_{pitch} < d_{ext} / 5,$$

où $d_{ext}$ est le diamètre extérieur de la cuve multicouche.

**2.** Système selon la revendication 1, dans lequel les nervures de support (15) sont fixées rigidement à la couche métallique externe (11) et ne sont pas fixées à la couche métallique interne (13).

**3.** Système selon la revendication 1, dans lequel les nervures de support (15) sont fixées rigidement aux couches métalliques externe (11) et interne (13).

**4.** Système selon la revendication 1, dans lequel les nervures de support (15) sont installées avec des jeux thermiques radiaux et azimutaux.

**5.** Système selon la revendication 1, dans lequel la partie inférieure de la cuve multicouche qui relie la partie cylindrique supérieure (16) de la cuve multicouche à la partie conique inférieure (17) de la cuve multicouche contient une enveloppe toroïdale composite à trois couches (18) qui assure la dilatation thermique de la couche interne indépendamment de celle de la couche externe.

**6.** Système selon la revendication 1, dans lequel la cuve multicouche contient une couche supplémentaire résistante à la corrosion de 0,1 à 0,5 mm d'épaisseur appliquée sur la couche métallique externe (11).

**7.** Système selon la revendication 1, dans lequel la cuve multicouche contient une couche supplémentaire de 0,5 à 5 mm d'épaisseur qui augmente le transfert de chaleur par convection vers l'eau appliquée sur la surface externe de la couche métallique externe (11).

Fig. 1

Fig. 2

A-A

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2253914 C2
- CN 1585034
- RU 21665108 C2
- RU 2063071 C1
- RU 2514419
- RU 100326